**Europäisches Patentamt**

**European Patent Office**

**Office européen des brevets**

(19)

(11) **EP 1 533 502 A2**

(12) **EUROPÄISCHE PATENTANMELDUNG**

(43) Veröffentlichungstag:
    **25.05.2005  Patentblatt 2005/21**

(51) Int Cl.[7]: **F02D 41/14**, F02D 41/40

(21) Anmeldenummer: **04018446.7**

(22) Anmeldetag: **04.08.2004**

(84) Benannte Vertragsstaaten:
    **AT BE BG CH CY CZ DE DK EE ES FI FR GB GR
    HU IE IT LI LU MC NL PL PT RO SE SI SK TR**
    Benannte Erstreckungsstaaten:
    **AL HR LT LV MK**

(30) Priorität: **22.11.2003  DE 10354658**

(71) Anmelder: **ROBERT BOSCH GMBH
    70442 Stuttgart (DE)**

(72) Erfinder:
    • **Weiss, Stefan
      71711 Steinheim-Kleinbottwar (DE)**
    • **Ben Yahia, Khaled
      70736 Fellbach-Schmiden (DE)**

(54) **Verfahren und Vorrichtung zur Bestimmung der Voreinspritzmenge in einem eine Mengenausgleichsregelung aufweisenden Einspritzsystem einer Brennkraftmaschine**

(57)    Ein Verfahren zum Betrieb eines eine Mengenausgleichsregelung aufweisenden Einspritzsystem einer Brennkraftmaschine, wobei das Einspritzsystem wenigstens einen mit einer Ansteuerdauer ansteuerbaren Injektor aufweist und wobei die Mengenausgleichsregelung, in Abhängigkeit von wenigstens einer Betriebskenngröße der Brennkraftmaschine, eine Mengenkorrektur des mittels des wenigstens einen Injektors eingespritzten Kraftstoffs mittels einer Korrekturmenge durchführt ist dadurch gekennzeichnet, daß zur Bestimmung der Voreinspritzmenge die Voreinspritzung eines Injektors abgeschaltet wird und aus der von der Mengenausgleichsregelung vorgenommenen Mengenkorrektur auf die Voreinspritzmenge geschlossen wird.

Fig.1  ( Stand der Technik )

**Beschreibung**

Stand der Technik

Die Erfindung betrifft ein Verfahren und eine Vorrichtung zur Bestimmung der Voreinspritzmenge in einem eine Mengenausgleichsregelung aufweisenden Einspritzsystem einer Brennkraftmaschine gemäß den Oberbegriffen der jeweiligen unabhängigen Ansprüche.

Bei aus dem Stand der Technik bekannten direkteinspritzenden Dieselmotoren für Kraftfahrzeuge wird zur Verringerung des bei diesen Motoren aufgrund der hohen Kompressionsdrücke relativ großen Verbrennungsgeräusches bereits vor dem Zeitpunkt einer drehmomentbildenden Haupteinspritzung zusätzlich eine kleine Kraftstoffmenge in einen Zylinder eingespritzt. Man spricht in diesem Fall von einer sogenannten "Voreinspritzung" (VE). Eine Voreinspritzung bewirkt eine Anhebung der Lufttemperatur über ein durch eine reine Kompression bedingtes Temperaturniveau hinaus. Zudem werden bei einer Voreinspritzung reaktive Radikale gebildet, die neben der genannten Temperaturerhöhung zusätzlich dazu beitragen, daß auch die Aufbereitung des Kraftstoffs der Haupteinspritzung (HE) verbessert wird. Alle diese Faktoren bewirken eine Verkürzung einer Zündverzugszeit bei der Verbrennung der Hauptmenge und so verläuft der durch die Verbrennung der Hauptmenge bedingte Druckanstieg im Zylinder durch den Einfluss der Voreinspritzung mit einem kleineren Gradienten. Hierbei ist von Bedeutung, daß der Druckgradient ein direktes Maß für die Intensität des Verbrennungsgeräusches darstellt.

Die thermodynamisch wirksame Voreinspritzmenge beträgt bei einem Voreinspritzvorgang typischer Weise 0,7 mm$^3$, wobei der genaue Wert allerdings vom Hubvolumen des jeweiligen Zylinders abhängig ist. Wird diese Kraftstoffmenge unterschritten, so steigt das Verbrennungsgeräusch erheblich an. Um ein Unterschreiten der minimalen Voreinspritzmenge zu vermeiden, werden bei der zeitlichen Ansteuerung von Einspritzaktoren (Injektoren) des Einspritzsystems, der sog. "Applikation", Sicherheitsfaktoren eingeführt, um mögliche Fertigungstoleranzen, mögliche Messungenauigkeiten bei der Injektorprüfung, zyklischen Schwankungen der Einspritzmenge und möglichen Mengendriften über die Laufzeit entgegenzuwirken. Die tatsächlich applizierte Voreinspritzmenge liegt aufgrund dieser Sicherheitsfaktoren typischerweise bei etwa 2 mm$^3$, damit die thermodynamische Wirksamkeit der Voreinspritzung über die Laufzeit mit einer gewissen Sicherheit erhalten bleibt. Auch der genaue Wert der Voreinspritzmenge ist naturgemäß vom Hubvolmen des jeweiligen Zylinders abhängig. Eine derart große Voreinspritzmenge führt jedoch auch dazu, daß die Partikelemissionen gegenüber der idealen Voreinspritzmenge um bis zu 30% ansteigen, was aufgrund der strengen Anforderungen an die Abgaswerte eines Kraftfahrzeugmotors auch nicht erwünscht ist.

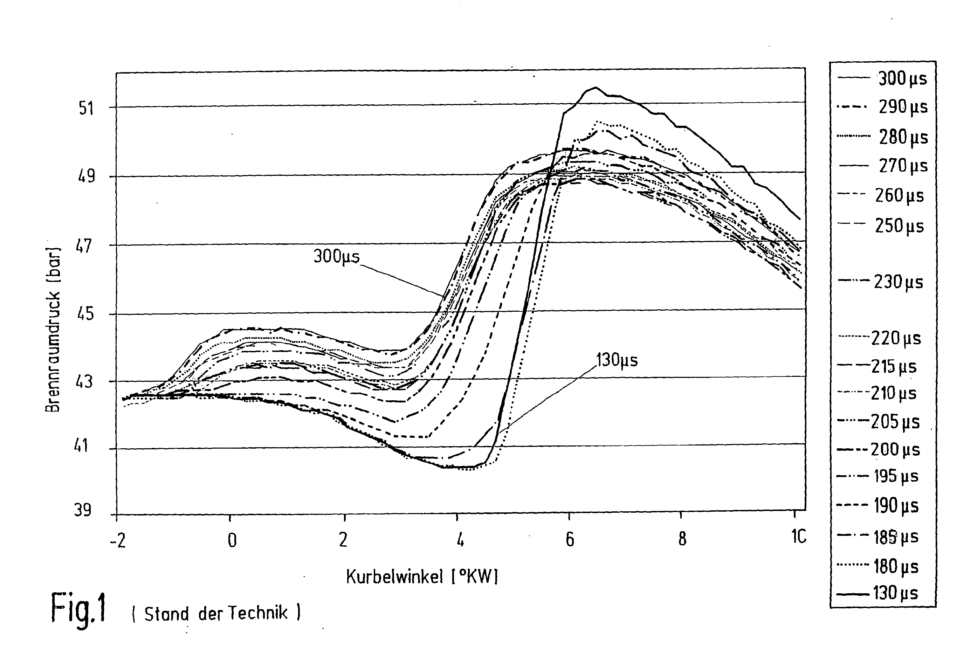

Die genannte Auswirkung einer Variation der Voreinspritzmenge bei einem einzelnen Zylinder einer Brennkraftmaschine auf den Zylinderdruckverlauf bei einer Haupteinspritzung illustriert Fig. 1. Aufgetragen ist hierin die Voreinspritzmenge über der Ansteuerdauer (Einheit µs) eines an dem betroffenen Zylinder angeordneten Injektors zur Einspritzung des Kraftstoffs in den Brennraum dieses Zylinders. Die Darstellung der Fig. 1 basiert darauf, daß alle anderen Zylinder der Brennkraftmaschine ihre ursprüngliche Ansteuerdauer von 300 µs beibehalten. Aus den gezeigten Kurvenverläufen ist zu ersehen, daß bei abnehmenden Ansteuerdauern bzw. Voreinspritzmengen der Brennraumdruck zunehmend variiert, wobei dieser Effekt zunehmender Druckgradienten bei Unterschreiten einer bestimmten Voreinspritzmenge besonders verstärkt auftritt.

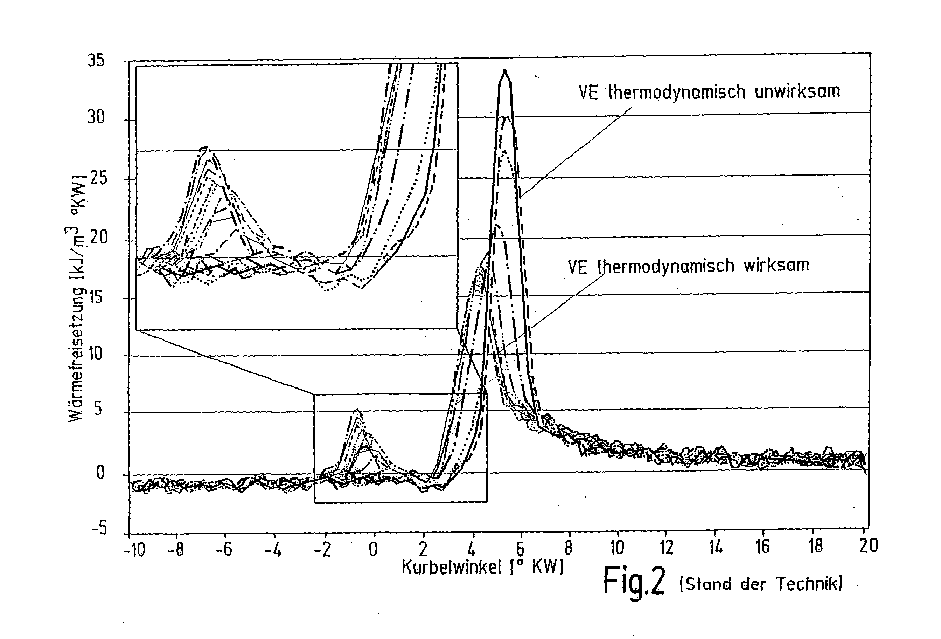

Die Fig. 2 zeigt typische Wärmefreisetzungskurven bei der Verbrennung von Kraftstoff in einer Brennkraftmaschine bei Variation der Ansteuerdauer der Voreinspritzung. Ausgehend von der im Normalfall applizierten Voreinspritzmenge wird hierbei die Ansteuerdauer der Voreinspritzung von 300 µs sukzessive auf 130 µs verkürzt. In der Ausschnittvergrößerung ist die unterschiedliche Wärmefreisetzung während der Voreinspritzung aufgrund der Variation der Voreinspritzmenge zu ersehen. Die in dem Hauptdiagrammteil gezeigte, gegenüber der Voreinspritzung wesentlich erhöhte Wärmefreisetzung bei der Haupteinspritzung zeigt eine sehr deutliche Erhöhung bei relativ niedrigen Ansteuerdauern im Bereich von 130 µs. Die Wärmefreisetzung bei der Verbrennung ist ein Maß für die thermodynamische Wirksamkeit der Verbrennung bei der Haupteinspritzung. Die in der Fig. 2 gezeigten Unterschiede bei der Wärmefreisetzung bewirken zudem unterschiedliche Kräfte auf einen Kolben der Brennkraftmaschine und somit auch unterschiedliche Kolbenbeschleunigungen aufgrund der Verbrennung.

Die genannten Unterschiede bei der Kolbenbeschleunigung können in an sich bekannter Weise über ein Drehzahlsignal der Brennkraftmaschine detektiert werden. Das Drehzahlsignal dient dabei unter anderem als Eingangssignal eines Laufruhereglers und wird mittels eines Drehzahlsensors von einem mit einer Kurbelwelle der Brennkraftmaschine kraftschlüssig verbundenen Geberrad abgenommen und aufintegriert. Durch die Aufintegration des Drehzahlsignals läßt sich der Beitrag eines einzelnen Zylinders am Drehzahlsignal ermitteln und Drehzahlschwankungen des einzelnen Zylinders erfassen. Die so erfaßten Drehzahlschwankungen werden anschließend von einer nachfolgend noch eingehender beschriebenen Mengenausgleichsregelung (MAR) in dem genannten Laufruheregler ausgewertet und Korrekturmengen für die einzelnen Injektoren berechnet, die bei der nächsten Einspritzung des jeweiligen Injektors aufaddiert werden. Diese Korrektur bewirkt im Ergebnis einen ruhigeren und gleichmäßigeren Motorlauf der Brennkraftmaschine.

Vorteile der Erfindung

Der vorliegenden Erfindung liegt nun die Aufgabe zugrunde, ein Verfahren und eine Vorrichtung der eingangs genannten Art bereitzustellen, durch welche eine präzise Bestimmung der Voreinspritzmenge und insbesondere eine Korrektur der Langzeitdrift realisierbar sind.

Diese Aufgabe wird erfindungsgemäß durch die Merkmale der unabhängigen Ansprüche gelöst. Vorteilhafte Ausgestaltungen und Weiterbildungen sind Gegenstand der jeweiligen Unteransprüche.

Das erfindungsgemäße Verfahren zur Bestimmung der Voreinspritzmenge in einem eine Mengenausgleichsregelung aufweisenden Einspritzsystem einer Brennkraftmaschine sieht zur Lösung der genannten Aufgabe vor, die Voreinspritzung eines Injektors abzuschalten und aus der von der Mengenausgleichsregelung als Folge dieser Abschaltung vorgenommenen Mengenkorrektur auf die Voreinspritzmenge zu schließen. Dieses Verfahren eröffnet die Möglichkeit, Informationen über die Voreinspritzmenge allein aus dem Drehzahlsignal, welches ohnehin von der Mengenausgleichsregelung verarbeitet wird, zu gewinnen. Hierdurch können Kosten für zusätzliche Klopfsensoren entfallen.

Darüber hinaus ermöglichen es das Verfahren und die Vorrichtung, die Menge der Voreinspritzung bzw. ihren Beitrag zum Drehmoment des Fahrzeugs bei eingebauten Injektoren zu ermitteln. Dies ist besonders vorteilhaft, da die Einbaurandbedingungen berücksichtigt werden und somit wesentlich bessere Bestimmungen der Voreinspritzmenge möglich sind, als dies auf Prüfbänken oder im Rahmen der Fertigung der Injektoren möglich ist.

Vorzugsweise wird die Voreinspritzung in vorgebbaren Betriebspunkten abgeschaltet.

Die von der Mengenausgleichsregelung eingespritzte Korrekturmenge entspricht im wesentlichen der Voreinspritzmenge, wobei ein Wirkungsgrad, der abhängt von der Menge selbst sowie vom Förderbeginn und der Drehzahl der Brennkraftmaschine, berücksichtigt wird. Der Wirkungsgrad kann beispielsweise in den vorgebbaren Betriebspunkten einem Kennfeld entnommen werden.

Da die durch Abschaltung der Voreinspritzung fehlende Voreinspritzmenge in der Regel zu einem Einbruch des von der Brennkraftmaschine erzeugten Drehmoments führt, sieht eine vorteilhafte Ausführungsform vor, die fehlende Voreinspritzmenge bei einer darauffolgenden Haupteinspritzung einzuspritzen. Auf diese Weise kann der störende Einbruch des Drehmoments vermieden werden.

Die fehlende Voreinspritzmenge kann dabei bei der darauffolgenden Haupteinspritzung an dem Injektor, bei dem die Voreinspritzung abgeschaltet wurde, erfolgen.

Bei einer anderen Ausgestaltung des Verfahrens ist vorgesehen, daß die fehlende Voreinspritzung an einem Injektor durch Änderung der Einspritzmengen sämtlicher Injektoren kompensiert wird.

Zeichnung

Die Erfindung wird nachfolgend, unter Bezugnahme auf die Zeichnung, anhand bevorzugter Ausführungsbeispiele eingehender beschrieben, aus denen weitere Merkmale und Vorteile der Erfindung hervorgehen.

In der Zeichnung zeigen:

Fig. 1    typische Brennraumdruckverläufe in einer hier betroffenen Brennkraftmaschine bei einer Variation der Ansteuerdauer einer Voreinspritzung in einem zugrundeliegenden Einspritzsystem, gemäß dem Stand der Technik;

Fig. 2    typische Wärmefreisetzungskurven in einer Brennkraftmaschine bei einer Variation der Ansteuerdauer einer Voreinspritzung, gemäß dem Stand der Technik;

Fig. 3    schematisch eine im Stand der Technik bekannte Mengenausgleichsregelung

Fig. 4    schematisch die von einer Mengenausgleichsregelung ermittelten Korrekturmengen über der Zeit eines von der Erfindung Gebrauch machenden Verfahrens zum Betrieb einer Brennkraftmaschine und

Fig. 5    schematisch die von einer Mengenausgleichsregelung ermittelten Korrekturmengen über der Zeit eines von der Erfindung Gebrauch machenden alternativen Verfahrens zum Betrieb einer Brennkraftmaschine.

Beschreibung

Die Figuren 1 und 2 wurden bereits in der Beschreibungseinleitung ausführlich beschrieben.

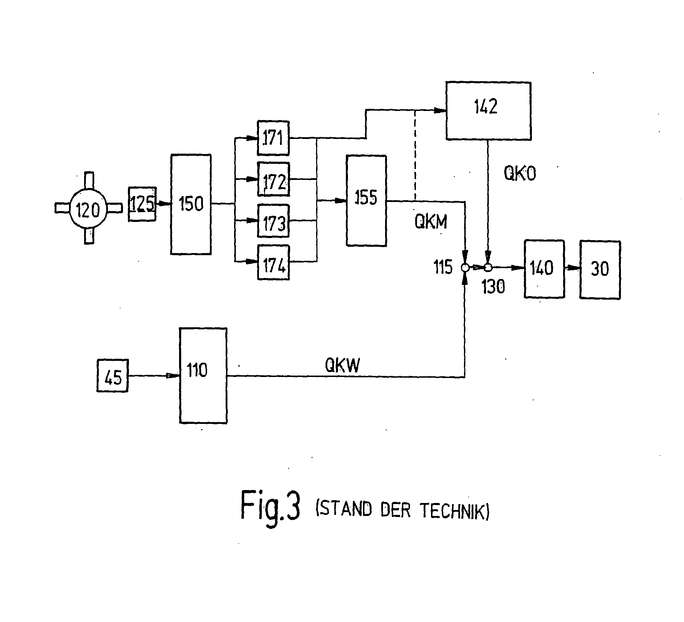

Das nachfolgend beschriebene Verfahren und die Vorrichtung setzen eine Mengenausgleichsregelung (MAR) voraus, welche bspw. aus der DE 199 45 618 A1 hervorgeht und nachfolgend anhand der Fig. 3 näher beschrieben wird.

Bei der MAR sei zunächst angenommen, daß Mengenfehler bei der Einspritzung von Kraftstoff zu einer Drehungleichförmigkeit der Brennkraftmaschine führen. Diese Drehungleichförmigkeit wirkt sich dahingehend aus, daß dem Drehzahlsignal Schwingungen überlagert werden, deren Frequenz einer Nockenwellenfrequenz und/oder Vielfachen der Nockenwellenfrequenz entsprechen. Diese Anteile im Drehzahlsignal mit Nockenwellenfrequenz charakterisieren die Drehungleichförmigkeit und werden durch die Mengenausgleichsregelung auf Null ausgeregelt.

Bei der Mengenausgleichsregelung ist jedem Zylinder der Brennkraftmaschine ein Regler zugeordnet, und zwar ein erster Regler 171 dem ersten Zylinder, ein zweiter Regler 172 dem zweiten Zylinder und entsprechend ein dritter und vierter Regler 173, 174 bei den übrigen Zylindern. Allerdings können die Zylinder auch mit nur einem umschaltbaren Regler zusammenarbeiten.

Mittels eines Sensors 125 und eines Geberrades 120 bestimmt eine erste Synchronisierung 150 einen Sollwert und einen Istwert für jeden einzelnen Regler 171 - 174. Die Ausgangssignale der Regler 171 - 174 werden einer zweiten Synchronisierung 155 zugeführt, welche eine Korrekturmenge QKM bereitstellt, mit dem eine mit dem Fahrerwunsch korrelierende Wunschmenge QKW korrigiert wird.

Die Fahrerwunschmenge QKW wird von einer Mengenvorgabe 110 geliefert, welche eine Kraftstoffmenge QKW berechnet, die dem mittels Sensoren 45 bereitgestellten tatsächlichen Fahrerwunsch entspricht. Dieses Mengensignal QKW gelangt zu einem ersten Verknüpfungspunkt 115, an dessen zweitem Eingang das genannte Ausgangssignal QKM der zweiten Synchronisierung 155 anliegt und an dem diese Signale additiv verknüpft werden.

Das Ausgangssignal des ersten Verknüpfungspunktes 115 gelangt zu einem zweiten Verküpfungspunkt 130, der wiederum eine Ansteuerdauerberechnung 140 beaufschlagt. Am zweiten Eingang des zweiten Verknüpfungspunktes 130 liegt das Signal QK0 einer Nullmengenkorrektur 142 an. Da die Nullmengenkorrektur 142 für die vorliegende Erfindung keine Bedeutung hat, wird von ihrer detaillierten Beschreibung abgesehen. Die Ansteuerdauerberechnung 140 berechnet, ausgehend von dem Ausgangssignal des zweiten Verknüpfungspunktes 130, ein Ansteuersignal zur Beaufschlagung einer Kraftstoffzumesseinheit 30. Die Ansteuerdauerberechnung 140 berechnet die Ansteuerdauem, mit denen elektrisch betätigte Ventile von Injektoren beaufschlagt werden.

Die Mengenausgleichsregelung ist so ausgebildet, daß die Regler 171 - 174 die den einzelnen Zylindern bspw. mittels der genannten Injektoren zugemessene Kraftstoffmenge auf einen gemeinsamen Mittelwert regeln. Misst nun ein Injektor aufgrund von Toleranzen eine erhöhte Kraftstoffmenge in den jeweiligen Zylinder zu, so wird für diesen Zylinder eine negative Kraftstoffmenge QKM zur Fahrerwunschmenge QKW hinzuaddiert. Misst dagegen ein Zylinder zuwenig Kraftstoff zu, so wird eine positive Kraftstoffmenge QKM zur Fahrerwunschmenge QKW hinzuaddiert.

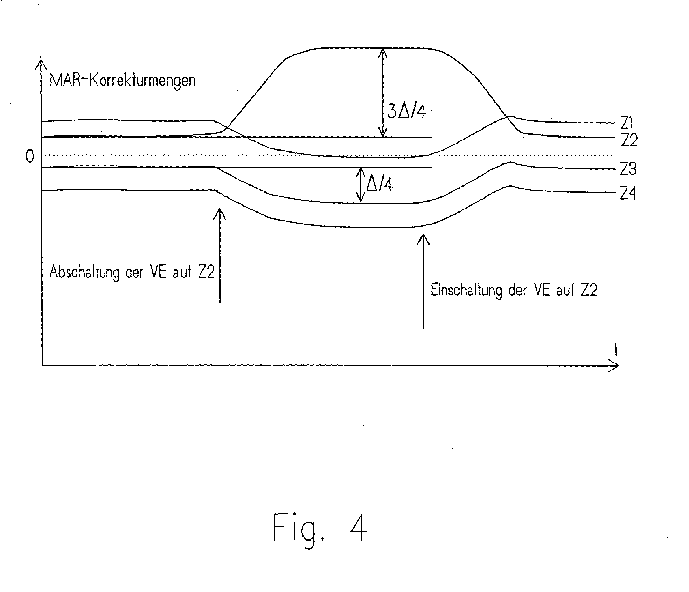

Die oben angesprochene Veränderung der Thermodynamik aufgrund der Veränderung der Voreinspritzmenge bei einem einzelnen Zylinder führt nun zu unterschiedlichen Korrekturmengen bei der Mengenausgleichsregelung in einem Laufruheregler. Da der Laufruheregler mittelwertfrei arbeitet, wird zwar versucht, den Einbruch des Drehmoments, d.h. die fehlende Menge zu kompensieren, die Zylinderbeiträge jedoch dennoch konstant zu halten. Zur Ermittlung der genauen Voreinspritzmenge wir nun an einem Zylinder die Voreinspritzung abgeschaltet, beispielsweise wie in Fig. 4 dargestellt, die Voreinspritzung des Zylinders 2 einer 4-Zylinder-Brennkraftmaschine, deren Zylinder in Fig. 4 mit Z1, Z2, Z3 und Z4 bezeichnet sind.

Die fehlende Voreinspritzmenge, die in der Regel zu einem Einbruch des Drehmoments der Brennkraftmaschine führt, kann zusammen mit der Haupteinspritzung eingespritzt werden. Auf diese Weise kann der Einbruch des Drehmoments vermieden werden. Sofern die Voreinspritzmenge korrekt war, werden durch den Laufruheregler keine Änderungen vorgenommen. Wenn diese Menge allerdings von der gewünschten Menge abweicht, reagiert der Laufruheregler auf diesen Fehler, das heißt auf diese Abweichung.

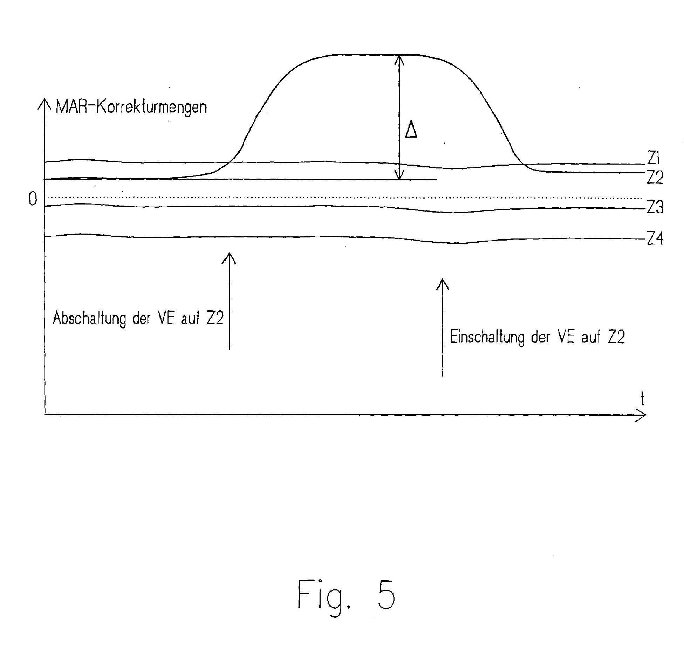

In Fig. 5 ist eine Modifikation des Verfahrens dargestellt, wobei hier angenommen wird, daß die Mengenausgleichsregelung nicht mittelwertfrei arbeitet. Da die Störungsquelle, d.h. der Zylinder, bei dem die Voreinspritzung abgeschaltet wurde, im vorliegenden Falle Zylinder Z2, eindeutig zu lokalisieren ist, soll nur die Einspritzmenge des betroffenen Zylinders korrigiert werden, wie es in Fig. 5 schematisch dargestellt ist. Auf diese Weise entfällt die Segmentwahl der Mengenausgleichsregelung, so daß die Korrektur wesentlich schneller stattfindet. Darüber hinaus ist es weiterhin möglich, eine zusätzliche Einspritzmenge an dem betroffenen Zylinder bei der Haupteinspritzung vorzuhalten, um so sicherzustellen, daß der Einbruch des Drehmoments zum Teil kompensiert wird, sich also die Korrekturmenge Δ (siehe Fig. 5) verringert.

Nachfolgend wird eine andere Ausgestaltung eines Verfahrens zur Ermittlung der Korrekturmenge an einem Zylinder mittels der von einem Laufruheregler vorgenommenen Mengenausgleichsregelung beschrieben. Wird die Brennkraftmaschine im Leerlauf zunächst ohne Voreinspritzung betrieben, stellt der Laufruheregler ein Gleichgewicht unter den Zylindern her, indem die eingespritzten Mengen einzeln korrigiert werden. Wird nun eine genau zugemessene Voreinspritzung eingeschaltet, so wirkt sich dies nicht auf den Laufruheregler aus, da die abgegebenen Momentenbeiträge identisch sind. Ist die Voreinspritzmenge bei den verschiedenen Zylindern dagegen nicht identisch, stellt der Laufruheregler das Gleichgewicht unter den Zylindern wieder her und es werden Korrekturwerte ermittelt. Wenn zudem der Mittelwert der Voreinspritzmengen von einem vorgegebenen Wert abweicht, stellt sich ein neuer Wert der Gesamteinspritzmenge ein. Da die Laufruheregelkorrektur linear erfolgt, ist es möglich, aus den obengenannten Daten auf die tatsächlich eingespritzten Mengen zurückzuschließen. Dies wird nachfolgend erläutert.

Ausgegangen wird von einer Brennkraftmaschine mit n Zylindern. Der Laufruheregler stellt im Leerlauf ohne Voreinspritzung die Werte $K_1$, $K_2$, $K_3$ ... $K_n$ ein. Wenn nun die Menge nur auf einem Zylinder, z.B. auf dem p-ten-Zylinder, fehlerhaft ist, reagiert der Laufruheregler auf diese fehlerhafte Menge, indem er an diesem Zylinder eine Menge $\Delta_p$* (n - 1)/n zu $K_p$ addiert, wobei $\Delta_p$ den Mengenfehler und $K_p$ den von dem Laufruheregler an dem p-ten-Zylinder eingestellten Wert bedeuten. Bei den restlichen Zylindern wird jeweils eine Menge $\Delta_p/n$ abgezogen, da der Laufruheregler grundsätzlich mittelwertfrei arbeitet.

Die Laufruheregler-Reaktion an dem i-ten-Zylinder $Q_i^{FBC}$ aufgrund einer Störung auf dem p-Zylinder lautet demnach:

$$Q_i^{FBC} = \left\{ \begin{array}{ll} \Delta_p * ((n-1)/n), & \text{wenn } i = p \\ \Delta_p/n & \text{sonst} \end{array} \right.$$

Werden sämtliche Zylinderfehler addiert, so lautet der neue Laufruheregler-Korrekturwert an dem i-ten-Zylinder $K^{neu}_i$:

$$
\begin{aligned}
K^{neu}_i \quad &= K_i + \sum_{j=1;\, j \neq i}^{n} (-\Delta_j/n) + \Delta_i * ((n-1)/n) \\
&= K_i + \sum_{j=1;\, j \neq i} (-\Delta_j/n) + \Delta_i - (\Delta_i/n) \\
&= K_i - \sum_{j=1}^{n} \Delta_j/n + \Delta_i \\
&= K_i - \Delta_M + \Delta_i
\end{aligned}
$$

Die Differenz zwischen der neuen und alten Korrekturmenge an dem i-Zylinder ist demnach die Summe eines mittleren Fehlers und eines zylinderspezifischen Terms. $\Delta_M$ entspricht der Differenz zwischen vorgegebenen "Wunschmengen" vor und nach der Einschaltung der Voreinspritzung. Die Abweichung der eingespritzten Mengen vom Mittelwert der Voreinspritzung läßt sich aus den obenstehenden Gleichungen ermitteln. Die Abweichung des Mittelwerts von der Wunschmenge kann in nachfolgenden Einspritzungen durch eine kollektive Anpassung der Einspritzmengen an den verschiedenen Zylindern kompensiert werden.

**Patentansprüche**

1. Verfahren zum Betrieb eines eine Mengenausgleichsregelung aufweisenden Einspritzsystem einer Brennkraftmaschine, wobei das Einspritzsystem wenigstens einen mit einer Ansteuerdauer ansteuerbaren Injektor aufweist und wobei die Mengenausgleichsregelung, in Abhängigkeit von wenigstens einer Betriebskenngröße der Brennkraftmaschine, eine Mengenkorrektur des mittels des wenigstens einen Injektors eingespritzten Kraftstoffs mittels einer Korrekturmenge durchführt, **dadurch gekennzeichnet, daß** zur Bestimmung der Voreinspritzmenge die Voreinspritzung eines Injektors abgeschaltet wird und aus der von der Mengenausgleichsregelung vorgenommenen Mengenkorrektur auf die Voreinspritzmenge geschlossen wird.

2. Verfahren nach Anspruch 1, **dadurch gekennzeichnet, daß** die Abschaltung der Voreinspritzung in vorgegebenen Betriebspunkten erfolgt.

3. Verfahren nach Anspruch 1 oder 2, **dadurch gekennzeichnet, daß** die Bestimmung der Voreinspritzmenge in einer Recheneinheit durch Multiplikation der Korrekturmenge mit einem Wirkungsgrad erfolgt.

4. Verfahren nach einem der Ansprüche 1 bis 3, **dadurch gekennzeichnet, daß** die durch Abschaltung der Voreinspritzung fehlende Voreinspritzmenge bei einer darauffolgenden Haupteinspritzung eingespritzt wird.

5. Verfahren nach Anspruch 4, **dadurch gekennzeichnet, daß** die durch Abschaltung der Voreinspritzmenge fehlende Voreinspritzmenge bei einer darauffolgenden Haupteinspritzung bei dem Injektor eingespritzt wird, dessen Voreinspritzmenge zuvor abgeschaltet wurde.

6. Verfahren nach Anspruch 4, **dadurch gekennzeichnet, daß** die durch Abschaltung der Voreinspritzung fehlende Voreinspritzmenge durch eine kollektive Anpassung der Einspritzmengen an sämtlichen Injektoren kompensiert wird.

7. Vorrichtung zum Betrieb eines eine Mengenausgleichsregelung aufweisenden Einspritzsystems einer Brennkraftmaschine, wobei das Einspritzsystem wenigstens einen mit einer Ansteuerdauer ansteuerbaren Injektor aufweist und wobei die Mengenausgleichsregelung, in Abhängigkeit von wenigstens einer Betriebskenngröße der Brennkraftmaschine, eine Mengenkorrektur des in den wenigstens einen Injektor eingespritzten Kraftstoffs mittels einer Korrekturmenge durchführt, **gekennzeichnet durch** Mittel zur Abschaltung der Voreinspritzung **durch** den wenigstens einen Injektor, Mittel zur Erfassung der Mengenausgleichsregelung der jeweils bereitgestellten Korrekturmenge und Auswertemittel zur Bestimmung der Voreinspritzmenge aus der Korrekturmenge.

8. Vorrichtung nach Anspruch 7, **dadurch gekennzeichnet, daß** die Auswertemittel Teil eines Motorsteuergeräts sind.

Fig.1 ( Stand der Technik )

7

Fig.2 (Stand der Technik)

Fig.3 (STAND DER TECHNIK)

Fig. 4

Fig. 5